# EUROPÄISCHE PATENTSCHRIFT

(11) **EP 3 996 977 B1**
(45) Veröffentlichungstag und Bekanntmachung des Hinweises auf die Patenterteilung: **26.02.2025**
(21) Anmeldenummer: 20735389.7
(22) Anmeldetag: 30.06.2020
(51) Int. Cl.: B62D 53/08

(54) **DIEBSTAHLSICHERUNGSVORRICHTUNG FÜR SATTELAUFLIEGER, KÖNIGSZAPFEN UND SATTELAUFLIEGER**
ANTI-THEFT DEVICE FOR SEMITRAILERS, KINGPIN AND SEMITRAILER
DISPOSITIF ANTIVOL POUR SEMI-REMORQUE, PIVOT CENTRAL ET SEMI-REMORQUE

(30) Priorität: 08.07.2019 DE 102019118398
(43) Veröffentlichungstag der Anmeldung: 18.05.2022
(60) Teilanmeldung: 24181274.2
(73) Patentinhaber: JOST-WERKE Deutschland GmbH, 63263 Neu-Isenburg (DE)
(72) Erfinder: ALGÜERA, José Manuel, 63739 Aschaffenburg (DE)
(74) Vertreter: WSL Patentanwälte Partnerschaft mbB
(86) Internationale Anmeldenummer: PCT/EP2020/068327
(87) Internationale Veröffentlichungsnummer: WO 2021/004829

(56) Entgegenhaltungen:
- DE-U1- 202010 013 121
- US-A- 3 647 243
- US-B1- 6 394 480

## Beschreibung

Die Erfindung betrifft eine Diebstahlsicherungsvorrichtung für Sattelauflieger mit einem Sicherungselement, das von einer eingefahrenen Ruheposition in eine ausgefahrene Sicherungsposition und umgekehrt bewegbar ist, gemäß dem Oberbegriff des Anspruchs 1.

Die Erfindung betrifft auch einen Königszapfen sowie einen Sattelauflieger.

Als Diebstahlsicherungsvorrichtungen sind sogenannte Königszapfenschlösser bekannt, die topfartig ausgebildet sind und von unten über den an der Sattelkupplungsauflageplatte befestigten Königszapfen geschoben und mit einem Schloss verriegelt werden. Ein solches Königszapfenschloss verhindert, dass der Sattelauflieger an ein Sattelzugfahrzeug ordnungsgemäß angekuppelt werden kann.

Derartige Königszapfenschlösser haben jedoch den Nachteil, dass sie ein relativ hohes Gewicht aufweisen und vom Fahrer unter der Sattelkupplungsauflageplatte angebracht werden müssen. Dazu muss sich der Fahrer unter den Sattelauflieger begeben, was einerseits zeitaufwendig ist und andererseits zu Verschmutzungen und gegebenenfalls Verletzungen des Fahrers führen kann.

Aus der DE 29 20 689 A1 ist als Diebstahlsicherungsvorrichtung eine Bolzenvorrichtung bekannt. Die Bolzenvorrichtung weist einen beweglichen Bolzen auf, der in der Nähe des Königszapfens im Zulaufweg der an der Sattelzugmaschine angeordneten Kupplungsmittel der Sattelkupplung angeordnet ist. Der Bolzen ist in eine in den Sattelauflieger eingefahrene Stellung und in eine über den Sattelauflieger vorstehende Stellung verstellbar, wobei Sperr-, Blockier- oder Verriegelungsmittel vorgesehen sind, um den Bolzen zumindest in der ausgefahrenen Stellung festzustellen. Der Bolzen ist mit einem Schloss versehen, das durch einen Sicherheitsschlüssel betätigbar ist. Diese Diebstahlsicherungsvorrichtung hat ebenfalls den Nachteil, dass der Fahrer sich unter den Sattelauflieger begeben muss und von Hand mittels des Schlüssels einen Riegel betätigen muss, um den Bolzen entweder in der Ruheposition oder in der ausgefahrenen Position festzustellen. Ein weiterer Nachteil besteht darin, dass in der Sattelaufliegerbodenplatte ein entsprechendes Loch angebracht werden muss, um dort die Diebstahlsicherungsvorrichtung zu installieren.

In der US 4,614,357 A wird eine Diebstahlsicherungsvorrichtung beschrieben, die ebenfalls in Fahrtrichtung vor dem Königszapfen angeordnet ist und eine separate Öffnung in der Bodenplatte des Aufliegers benötigt. Die Diebstahlsicherungsvorrichtung umfasst ebenfalls einen in vertikaler Richtung verschiebbaren Bolzen, der von einem Pneumatikzylinder mit horizontaler Bewegung über eine Kulissenführung fernbetätigbar ist. Mittels der Kulissenführung wird der Bolzen von einer Ruheposition in eine Sicherungsposition und umgekehrt bewegt. Diese Vorrichtung benötigt einen großen Bauraum, wobei die freiliegende Kulissenführung durch Verschmutzung in ihrer Funktion beeinträchtigt werden kann.

In der DE 20 2010 013 121 U1 ist in Fahrtrichtung vor dem Königszapfen eine Bolzeneinrichtung vorgesehen, die ebenfalls über eine Kulissenführung betätigbar ist. In der US-A-6 394 480 wird eine Anti-Kupplungsvorrichtung für einen Sattelauflieger zur Verhinderung des Ankuppelns des Königszapfens eines Sattelaufliegers an die Sattelkupplung einer Zugmaschine beschrieben. Diese Vorrichtung besteht aus einer Gehäuseanordnung, die innerhalb eines bestimmten Radius des Königszapfens angebracht ist und eine Halbkugel zum Eingriff in die Sattelkupplung der Zugmaschine aufweist, wenn die Halbkugel durch eine Verriegelungsanordnung in einer aktiven Position verriegelt ist. Die Anti-Kupplungsvorrichtung kann durch ein pneumatisches Ventilsystem zwischen einer aktiven und einer passiven Position bewegt werden.

Die US-A-3647243 offenbart eine abschließbare Kupplungsvorrichtung für einen Lkw-Anhänger mit einem Bolzen, der axial aus der Grundplatte herausbewegt werden kann, um in eine Kupplungsplatte einer Zugmaschine einzugreifen. Diese Schrift offenbart eine Diebstahlsicherungsvorrichtung gemäß dem Oberbegriff des Anspruchs 1.

Es ist Aufgabe der Erfindung, eine Diebstahlsicherungsvorrichtung bereitzustellen, die eine hohe betriebliche Sicherheit aufweist und auf einfache Weise in einem Sattelauflieger mit Königszapfen angeordnet werden kann.

Es ist auch Aufgabe der Erfindung, einen entsprechenden Königszapfen sowie einen Sattelauflieger mit einem Königszapfen und einer Diebstahlsicherungsvorrichtung anzugeben.

Diese Aufgabe wird mit einer Diebstahlsicherungsvorrichtung gemäß dem Anspruch 1 gelöst.

Die Aufgabe wird auch mit einem Königszapfen gemäß Anspruch 13 und einem Sattelauflieger gemäß Anspruch 14 gelöst.

Die Diebstahlsicherungsvorrichtung für Sattelauflieger umfasst mindestens ein Sicherungselement, das von einer eingefahrenen Ruheposition in eine ausgefahrene Sicherungsposition und umgekehrt bewegbar ist, und eine Betätigungseinrichtung, die ein am Sicherungselement angreifendes Stellelement aufweist.

Die Betätigungseinrichtung weist ein am Sicherungselement angreifendes erstes Stellmittel auf, das das Sicherungselement aus der Sicherungsposition in die Ruheposition bewegt und in dieser Ruheposition hält. Das Stellelement bewegt das Sicherungselement aus der Ruheposition in die Sicherungsposition und hält das Sicherungselement in der Sicherungsposition.

Der Sattelauflieger weist einen Königszapfen auf.

Das Sicherungselement ist ein zum Königszapfen zusätzliches Bauteil.

Der Königszapfen ist vorzugsweise ortsfest am Sattelauflieger angeordnet.

Die Ruheposition des Sicherungselements bezeichnet eine eingefahrene oder zurückgezogene Position des Sicherungselements, in der das Sicherungselement keine Funktion hat und das Ankoppeln des Sattelaufliegers mittels des ortsfest angeordneten Königszapfens nicht behindert oder verhindert.

Die Sicherungsposition des Sicherungselements bezeichnet eine ausgefahrene Position des Sicherungselements, in der das Sicherungselement seine Sicherungsfunktion erfüllt und das Ankoppeln des Sattelaufliegers verhindert.

Der Vorteil der Diebstahlsicherungsvorrichtung besteht darin, dass die Betätigungseinrichtung für die Bewegung des Sicherungselements aus der Sicherungsposition in seine Ruheposition einerseits und aus der Ruheposition in seine Sicherungsposition andererseits zwei unterschiedliche Bauteile, nämlich Stellelement und erstes Stellmittel, vorsieht, die unabhängig voneinander auf das Sicherungselement einwirken. Das Stellelement und das erste Stellmittel greifen vorzugsweise an unterschiedlichen Seiten am Sicherungselement an.

Durch diese Aufgabenteilung auf zwei Bauteile wird eine hohe betriebliche Sicherheit erreicht.

Vorzugsweise bewegt sich das Stellelement aus einer Freigabestellung in eine Sperrstellung und umgekehrt.

Die Freigabestellung bezeichnet eine Position des Stellelements, in der sich das Sicherungselement in seine Ruheposition bewegen kann. Das Stellelement löst sich vorzugsweise vom Sicherungselement und gibt den Weg für das Sicherungselement frei.

Die Sperrstellung bezeichnet eine Position des Stellelements, in der das Sicherungselement in seiner Sicherungsposition blockiert ist. In dieser Position kann das Sicherungselement in unbefugter Weise manuell nicht in seine Ruheposition verschoben werden.

Vorzugsweise umfasst das erste Stellmittel eine erste Federeinrichtung. Vorzugsweise ist die erste Federeinrichtung eine Druckfeder.

Wenn sich das Sicherungselement aus der Ruheposition in die Sicherungsposition bewegt, wird die erste Federeinrichtung gespannt. Da das Stellelement am Sicherungselement angreift, bewirkt das Stellelement die Bewegung des Sicherungselements in die Sicherungsposition. Hierbei bewegt sich das Stellelement von der Freigabestellung in die Sperrstellung. Solange das Stellelement in der Sperrstellung verbleibt und das Sicherungselement in der Sicherungsposition hält, bleibt die erste Federeinrichtung gespannt.

Erst wenn das Stellelement sich aus der Sperrstellung in die Freigabestellung zurückbewegt, kann sich die erste Federeinrichtung wieder entspannen und das Sicherungselement in seine Ruheposition drücken. Die Einnahme der Ruheposition des Sicherungselements erfolgt somit automatisch, wenn sich das Stellelement in seine Freigabestellung bewegt.

Erfindungsgemäß weist die Betätigungseinrichtung ein zweites Stellmittel auf, das das Stellelement von der Freigabestellung in die Sperrstellung bewegt. Vorzugsweise hält das zweite Stellmittel das Stellelement in der Sperrstellung.

Erfindungsgemäß umfasst das zweite Stellmittel eine zweite Federeinrichtung. Vorzugsweise ist die zweite Federeinrichtung eine Druckfeder.

Diese zweite Federeinrichtung wird gespannt, wenn das Stellelement von der Sperrstellung in die Freigabestellung bewegt wird.

Die Bewegung des Stellelements in die Sperrstellung erfolgt automatisch, weil die zweite Federeinrichtung das Stellelement auf Grund ihrer Federkraft in die Sperrstellung drückt.

Vorzugsweise ist die Federkraft der zweiten Federeinrichtung größer als die Federkraft der ersten Federeinrichtung. Dies hat den Vorteil, dass das Sicherungselement immer in die Sicherungsposition gedrückt und in der Sicherungsposition gehalten wird und zwar solange, bis aktiv von außen das Stellelement unter Überwindung der Federkraft der zweiten Federeinrichtung in seine Freigabestellung bewegt wird. Erst dann kann die erste Federeinrichtung, insbesondere automatisch, das Sicherungselement in die Ruheposition drücken.

Vorzugsweise ist zwischen dem Sicherungselement und dem Stellelement eine Übersetzungseinrichtung angeordnet. Vorzugsweise bilden das Sicherungselement und das Stellelement eine Übersetzungseinrichtung. Vorzugsweise wird ein längerer Stellweg des Stellelements in einen kürzeren Stellweg des Sicherungselements übersetzt.

Vorzugsweise weist das Stellelement eine Auslenkkontur auf, die bei Bewegung des Stellelements in seine Sperrstellung am Sicherungselement angreift und das Sicherungselement in seine Sicherungsstellung bewegt.

Vorzugsweise weist auch das Sicherungselement eine Auslenkkontur auf. Beide Auslenkkonturen wirken vorzugsweise zusammen und bilden eine Übersetzungseinrichtung. Die Auslenkkonturen können z.B. Anlaufschrägen sein. Vorzugsweise weisen sowohl das Sicherungselement als auch das Stellelement jeweils mindestens eine Anlaufschräge auf. Die Anlaufschrägen erleichtern das Angreifen des Stellelements am Sicherungselement. Vorzugsweise weist die Anlaufschräge des Sicherungselements einen Neigungswinkel α und die Anlaufschräge des Stellelements den Neigungswinkel β auf. Unter dem Neigungswinkel wird der Winkel zwischen der Neigungsfläche der Anlaufschräge und einer Senkrechten zur Bewegungsrichtung des Sicherungselements bzw. des Stellelements verstanden.

Der Neigungswinkel wird vorzugsweise derart gewählt, dass Selbsthemmung auftritt. Die Selbsthemmung hat den Vorteil, dass das Sicherungselement nicht in unbefugter Weise, z. B. von Hand, von seiner Sicherungsposition in seine Ruheposition verstellt werden kann.

Vorzugsweise stehen die Bewegungsrichtungen von Sicherungselement und Stellelement senkrecht zueinander. In diesem Fall gilt vorzugsweise α < β. Vorzugsweise liegt α zwischen 2° und 10°.

Die Anlaufschrägen laufen bei fortschreitender Bewegung des Stellelements in seine Sperrstellung übereinander, wodurch das Sicherungselement von der Ruheposition in die Sicherungsposition bewegt wird.

Die Bewegung des Stellelements von der Sperrstellung in die Freigabestellung, wodurch die Diebstahlsicherungsvorrichtung deaktiviert wird, ist die einzige Bewegung, die nur vom Fahrer veranlasst werden kann bzw. veranlasst werden muss und die vorzugsweise entweder mechanisch oder elektromechanisch ausgeführt wird.

Die mechanische Ausführungsform sieht vor, dass die Betätigungseinrichtung vorzugsweise mindestens ein Zugelement, wie beispielsweise eine Stange oder einen Bowdenzug, aufweist, das mit einem ersten Ende an dem Stellelement befestigt ist. Durch Ziehen an dem Zugelement wird das Stellelement von der Sperrstellung in die Freigabestellung bewegt.

Vorzugsweise ist an einem zweiten Ende des Zugelements eine Schließeinrichtung vorgesehen, die beispielsweise mittels eines Schlüssels gesperrt und entsperrt werden kann. Unter einem Schlüssel wird vorzugsweise ein mechanischer Schlüssel oder ein Passwort verstanden, das mittels einer Tastatur in die Schließeinrichtung eingegeben werden kann. Damit wird sichergestellt, dass das Zugelement nur dann gezogen werden kann, wenn zuvor die Schließeinrichtung entsperrt worden ist.

Die elektromechanische Ausführungsform sieht vor, dass die Betätigungseinrichtung vorzugsweise einen Aktuator aufweist, der das Stellelement von seiner Sperrstellung in die Freigabestellung bewegt. Der Aktuator ist ein Bauelement, das elektrische Signale in mechanische Bewegung umsetzt. Vorzugsweise ist am Stellelement eine Stange angeordnet, an der der Aktuator angreift. Der Aktuator ist derart ausgelegt, dass der Aktuator die Stange gegen die Federkraft der zweiten Federeinrichtung zieht.

Der Aktuator hat den Vorteil, dass die Betätigungseinrichtung elektrisch z. B. mittels einer Fernbedienung betätigt werden kann.

Vorzugsweise ist der Aktuator elektrisch an eine Steuereinrichtung angeschlossen, mittels der der Aktuator ansteuerbar ist.

Vorzugsweise weist die Steuereinrichtung die Schließeinrichtung auf, die beispielsweise mittels eines Schlüssels gesperrt und entsperrt werden kann. Damit wird sichergestellt, dass der Aktuator nur dann betätigt werden kann, wenn die Schließeinrichtung entsperrt worden ist.

Vorzugsweise ist das Sicherungselement ein Bolzen. Wenn die Diebstahlsicherungsvorrichtung an einem Sattelauflieger verbaut ist, ist der Bolzen vorzugsweise in vertikaler Richtung angeordnet und wird in vertikaler Richtung zwischen seiner Ruheposition und der Sicherungsposition verschoben.

Vorzugsweise sind das Stellelement und das Sicherungselement derart angeordnet sind, dass die Bewegungsrichtung des Stellelements senkrecht zur Bewegungsrichtung des Sicherungselementes verläuft. Dadurch wird eine raumsparende Anordnung geschaffen, die sich für den Einbau in einem Sattelauflieger besonders gut eignet.

Bei einer vertikalen Ausrichtung des Sicherungselements ist das Stellelement in dieser Ausführungsform vorzugsweise horizontal ausgerichtet und in horizontaler Richtung bewegbar.

Gemäß einer weiteren Ausführungsform ist eine Kontrolleinrichtung zur Überwachung der Stellposition des Sicherungselements und/oder des Stellelements vorgesehen.

Die Kontrolleinrichtung weist vorzugsweise mindestens einen Sensor, insbesondere mindestens einen Näherungsschalter, zur Ermittlung der Stellposition des Sicherungselements oder des Stellelements auf.

Vorzugsweise sind zwei solcher Sensoren vorgesehen, wobei jeweils ein Sensor dem Sicherungselement und ein Sensor dem Stellelement zugeordnet ist.

Die Kontrolleinrichtung kann beispielsweise akustische und/oder optische Signale wie z. B. Alarmsignale, in Abhängigkeit der jeweiligen Stellposition von Sicherungselement und/oder Stellelement abgeben, so dass der Versuch einer unbefugten Manipulation der Diebstahlsicherungsvorrichtung dem Bedienungspersonal sofort angezeigt oder mitgeteilt wird und Unbefugte veranlasst werden, die Manipulation zu beenden. Hierzu ist die Kontrolleinrichtung vorzugsweise an eine entsprechende akustische und/oder optische Anzeigeeinrichtung angeschlossen oder die Kontrolleinrichtung weist eine solche Anzeigeeinrichtung auf.

Vorzugsweise ist die Kontrolleinrichtung mit der Steuereinrichtung und/oder mit der Schließeinrichtung elektrisch verbunden. Mittels der Kontrolleinrichtung wird überprüft, ob die Befehle der Steuereinrichtung auch tatsächlich zum gewünschten Ergebnis geführt haben, d.h. ob z. B. das Sicherungselement tatsächlich in die Sicherungsposition oder die Ruheposition bewegt worden ist.

Mindestens das Sicherungselement und das Stellelement sowie mindestens die Stellmittel der Betätigungseinrichtung sind vorzugsweise in einem Gehäuse angeordnet. Vorzugsweise ist auch die Kontrolleinrichtung in dem Gehäuse untergebracht.

Es wird dadurch eine kompakte Einheit geschaffen, die auf einfache Weise an der für die Diebstahlsicherung vorgesehenen Öffnung in der Bodenwand des Sattelaufliegers montiert werden kann.

Vorzugsweise ist das Gehäuse ein Königszapfenteller. Der Königszapfenteller ist ein Bauteil, das in einer Öffnung in der Bodenwand des Sattelaufliegers befestigt, insbesondere eingeschweißt wird. An dem Königszapfenteller wird der Königszapfen insbesondere mittels Schrauben befestigt. Die Durchtrittsöffnung für das Sicherungselement befindet sich in dieser Ausführungsform in dem Königszapfenteller, so dass eine weitere Öffnung für die Diebstahlsicherungsvorrichtung in der Bodenwand des Sattelaufliegers entfällt. Da die ohnehin für den Einbau des Königszapfens erforderliche Öffnung in der Bodenwand des Sattelaufliegers auch für die Diebstahlsicherungsvorrichtung genutzt werden kann, werden die Einbaukosten deutlich reduziert.

Ein weiterer Vorteil besteht darin, dass das Sicherungselement so dicht am Königszapfen angeordnet ist, dass der Verschlusshaken einer Sattelkupplung, der üblicherweise den Königszapfen umgreift, weder den Königszapfen noch das in Sicherungsposition befindliche Sicherungselement umgreifen kann. Das Sicherungselement kann deshalb in einer beliebigen Position auf einem Kreis um den Königszapfen angeordnet sein. Es ist somit nicht zwingend erforderlich, dass das Sicherungselement in Fahrtrichtung vor dem Königszapfen angeordnet ist. Das Sicherungselement kann beispielsweise auch in Fahrtrichtung hinter oder neben dem Königszapfen angeordnet sein.

Diese Ausführungsform hat den weiteren Vorteil, dass der Durchmesser D₁ des Sicherungselements kleiner als der Durchmesser D₂ des Königszapfens sein kann.

Ein Ausbau, eine Zerstörung oder eine unbefugte Manipulation der Diebstahlsicherungsvorrichtung werden weitgehend erschwert oder sogar verhindert und sind nicht ohne Ausbau oder Beschädigung der Befestigung des Königszapfens oder des Königszapfens selbst möglich. Mit einem beschädigten oder nicht mehr ordnungsgemäß befestigten Königszapfen lässt sich der Sattelauflieger nicht mehr ziehen. Ein weiterer Vorteil besteht darin, dass der Königszapfen mit der Diebstahlsicherungsvorrichtung als komplette Einheit in den Verkehr gebracht und als solche eingebaut werden kann.

Eine zweite, nicht beanspruchte Alternative betrifft eine Diebstahlsicherungsvorrichtung für Sattelauflieger mit einem Königszapfenteller für einen Königszapfen und mit mindestens einem Sicherungselement, das von einer eingefahrenen Ruheposition in eine ausgefahrene Sicherungsposition und umgekehrt bewegbar ist, und mit einer Betätigungseinrichtung, die am Sicherungselement angreift, wobei mindestens das Sicherungselement in dem Königszapfenteller beweglich angeordnet ist. Vorzugsweise ist mindestens auch das Stellmittel der Betätigungseinrichtung in dem Königszapfenteller des Königszapfens angeordnet. Der Königszapfenteller bildet ein robustes Gehäuse, in dem vorzugsweise mindestens das Sicherungselement und das Stellelement sowie mindestens die Stellmittel der Betätigungseinrichtung angeordnet sind.

Vorzugsweise ist auch die Kontrolleinrichtung in dem Königszapfenteller angeordnet.

Vorzugsweise weist der Königszapfen einen Befestigungsflansch auf, der eine Durchtrittsöffnung für das Sicherungselement aufweist. Der Vorteil besteht darin, dass das Sicherungselement direkt am Königszapfen angeordnet ist und eine zusätzliche Öffnung für die Diebstahlsicherungsvorrichtung in der Bodenwand des Sattelaufliegers entfällt.

Die Erfindung bezieht sich auch auf einen Königszapfen mit einem Königszapfenteller, der an einer Bodenwand eines Sattelaufliegers befestigbar ist, wobei der Königszapfenteller die erfindungsgemäße Diebstahlsicherungsvorrichtung aufweist. Vorzugsweise weist der Königszapfen einen Befestigungsflansch auf, mit dem der Königszapfen an dem Königszapfenteller befestigbar ist, wobei der Befestigungsflansch eine Durchtrittsöffnung für das Sicherungselement aufweist.

Der Königszapfen weist eine Länge L auf und das Sicherungselement steht in seiner Sicherungsposition vorzugsweise über eine Länge Ls von mindestens L/10, insbesondere von mindestens L/8 und besonders bevorzugt von L/3 gegenüber der Unterseite einer Bodenplatte des Sattelaufliegers.

Vorzugsweise ist Ls ≤ L.

Die Länge Ls ist vorzugsweise derart zu wählen, dass das Sicherungselement sich mindestens 5 mm, vorzugsweise mindestens 7 mm in axialer Richtung in die Taille des Königszapfens erstreckt, wodurch ein Ergreifen des Königszapfens mittels des Verschlusshakens der Sattelkupplung wirksam verhindert wird.

Das Sicherungselement weist einen Durchmesser D1 auf, der vorzugsweisegrößer dem größten Durchmesser D2 des Königszapfens ist. Diese Ausführungsform ist insbesondere dann von Vorteil, wenn das Sicherungselement in Fahrtrichtung vor dem Königszapfen angeordnet ist.

Für den Durchmesser D₁ des Sicherungselements gilt vorzugsweise D₁ = 8 mm oder D₁ > 8 mm, insbesondere größer 10 mm. Damit wird verhindert, dass der Königszapfen bei unbefugtem Ankuppeln des Sattelaufliegers seine Endposition in der Sattelkupplung eines Zugfahrzeugs erreichen kann. Dies ist insbesondere dann von Vorteil, wenn das Sicherungselement in Fahrtrichtung vor dem Königszapfen angeordnet ist. Der Durchmesser D₁ kann maximal 100 mm, insbesondere maximal 90 mm, besonders bevorzugt maximal 50 mm betragen.

Der Durchmesser D1 des Sicherungselements kann vorzugsweise dann kleiner oder gleich dem Durchmesser D2 sein, wenn das Sicherungselement im Königszapfenteller angeordnet ist.

Dadurch wird erreicht, dass bereits der Versuch, den Sattelauflieger eventuell über das Sicherungselement am Zugfahrzeug anzukoppeln, fehlschlägt. Auch ein Einfahren des Sicherungselementes über die Engstelle des Einfahrmauls der Sattelkupplung kann wirksam verhindert werden.

Die Erfindung betrifft auch einen Sattelauflieger mit einem Königszapfen und einer erfindungsgemäßen Diebstahlsicherungsvorrichtung, wobei das mindestens eine Sicherungselement derart am Sattelauflieger angeordnet ist, dass das Sicherungselement in seiner Sicherungsposition ein Ankuppeln des Königszapfens verhindert. Der Sattelauflieger kann auch zwei Diebstahlsicherungsvorrichtungen gemäß der ersten Alternative aufweisen.

Vorzugsweise ragen das Sicherungselement oder die Sicherungselemente in ihrer Sicherungsposition in einem Zulaufbereich von der Unterseite des Sattelaufliegers vor, wobei der Zulaufbereich durch eine durch den Königszapfen gehende zu einer Mittellinie M des Sattelaufliegers senkrechte Linie A und durch die Vorderkante des Sattelaufliegers begrenzt ist.

Die Breite B des Zulaufbereichs ist vorzugsweise auf die Breite einer Sattelkupplung beschränkt und beträgt vorzugsweise B ≤ 1 m, insbesondere B ≤ 0,8 m. Besonders bevorzugt ist mindestens ein Sicherungselement im Zulaufweg innerhalb des Zulaufbereichs der Sattelkupplung, insbesondere auf einer Mittellinie M des Zulaufbereichs angeordnet.

Vorzugsweise ist das Sicherungselement in Fahrtrichtung des Sattelaufliegers vor dem Königszapfen angeordnet.

Vorzugsweise ist das Sicherungselement in vertikaler Richtung, d.h. senkrecht zur Bodenwand des Sattelaufliegers angeordnet.

Wenn die Diebstahlsicherungsvorrichtung ein Zugelement, wie z. B. eine Stange oder einen Bowdenzug zur Betätigung des Stellelements aufweist, dann sind diese Komponenten vorzugsweise innerhalb des Sattelaufliegers angeordnet, z.B. im Innenraum einer Quertraverse des Sattelaufliegers. Dies hat den Vorteil, dass das Zugelement von außen nicht zugänglich ist und somit nicht unberechtigterweise unter Umgehung der Schließeinrichtung gezogen werden kann, um die Diebstahlsicherungsvorrichtung auszuschalten. Das Zugelement sowie das Stellelement und das zweite Stellmittel sind vorzugsweise horizontal, d. h. parallel zur Bodenwand des Sattelaufliegers angeordnet.

Die Schließeinrichtung ist vorzugsweise innerhalb des Sattelaufliegers angeordnet. Die Schließeinrichtung ist vorzugsweise derart angeordnet, dass sie nur von der rechten oder der linken Seite des Sattelaufliegers soweit zugänglich ist, dass sie zum Betätigen bedient werden kann.

Beispielhafte Ausführungsformen werden nachfolgend an Hand der Zeichnungen näher erläutert, die nicht maßstabsgetreu sind.

Es zeigen:
- Figur 1a: eine Schnittdarstellung einer ersten Ausführungsform der Diebstahlsicherungsvorrichtung mit einem Sicherungselement in Sicherungsposition,
- Figur 1b: die in Figur 1 dargestellte Diebstahlsicherungsvorrichtung mit einem Sicherungselement in Ruheposition,
- Figur 2: eine Schnittdarstellung einer Diebstahlsicherungsvorrichtung gemäß einer zweiten Ausführungsform, Figuren
- 3a,3b: vergrößerte Darstellungen eines Bereichs X in den Figuren 1A und 1B,
- Figur 4: eine Unteransicht eines Sattelaufliegers, und
- Figur 5: eine schematische Darstellung der Einzelkomponenten der Diebstahlsicherungsvorrichtung.

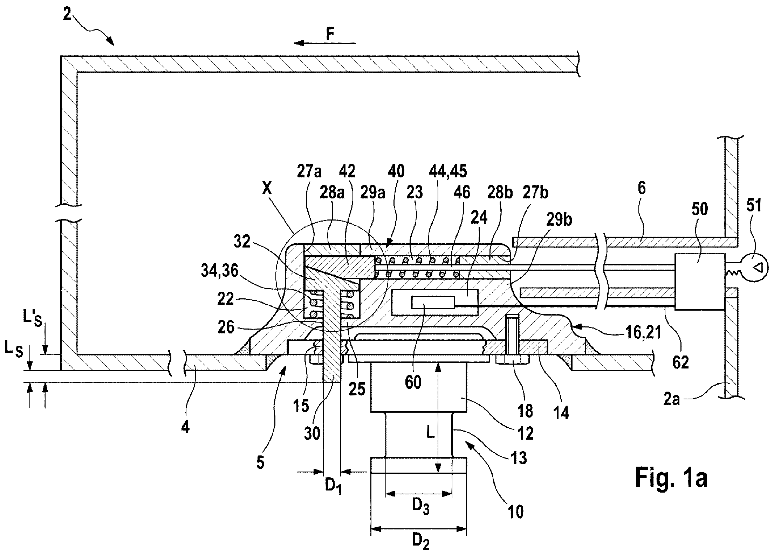

Figur 1a zeigt einen Querschnitt durch einen Sattelauflieger 2, durch einen Königszapfen 10 und durch einen Königszapfenteller 16 mit einer Diebstahlsicherungsvorrichtung 20 gemäß einer ersten Ausführungsform. Die Fahrtrichtung des Sattelaufliegers 2 ist durch den Pfeil F gekennzeichnet.

Der Königszapfenteller 16 ist an einer Öffnung 5 in der Bodenplatte 4 des Sattelaufliegers 2 angeordnet, insbesondere angeschweißt. Der Königszapfen 10 weist einen Befestigungsflansch 14 und einen Zapfen 12 auf, der einen größten Durchmesser D₂ und eine Länge L aufweist. Der Zapfen 12 besitzt eine Taille 13 mit einem Durchmesser D₃, der kleiner ist als der Durchmesser D₂. An dieser Taille 13 greift der Verschlusshaken der Sattelkupplung an, wenn der Königszapfen beim Ankoppeln des Sattelaufliegers seine Endposition in der Sattelkupplung eingenommen hat. Der Königszapfen 10 ist an dem Befestigungsflansch 14 mittels Befestigungsschrauben 18 am Königszapfenteller 16 befestigt.

Der Königszapfenteller 16 weist eine erste Kammer 22, eine zweite Kammer 23 und eine dritte Kammer 24 auf. Innerhalb dieser Kammern 22, 23, 24 ist die Diebstahlsicherungsvorrichtung 20 angeordnet. Der Königszapfenteller 16 bildet ein Gehäuse 21 für die Diebstahlsicherungsvorrichtung 20.

In der ersten Kammer 22 ist ein Sicherungselement 30 in Form eines Bolzens mit dem Durchmesser D₁ in vertikaler Richtung verschiebbar angeordnet. Das Sicherungselement 30 befindet sich in seiner Sicherungsposition, in der der Bolzen mit einer Länge Ls gegenüber der Unterseite der Bodenplatte 4 des Sattelaufliegers 2 nach unten vorsteht. In dieser Darstellung ist der Durchmesser D₁ kleiner als der Durchmesser D₂. Bezüglich der Unterseite des Befestigungsflansches 14 steht das Sicherungselement 30 um eine Länge Ls' vor, für die Ls' = Ls + Dicke der Bodenwand 4 gilt.

Das Sicherungselement 30 erstreckt sich durch eine Durchtrittsöffnung 26 in der Bodenwand 25 der ersten Kammer 22. Des Weiteren erstreckt sich das Sicherungselement 30 durch eine Durchtrittsöffnung 15 im Befestigungsflansch 14.

Das Sicherungselement 30 weist einen Ringbund 32 auf. Zwischen dem Ringbund 32 und der Bodenwand 25 ist ein erstes Stellmittel 34 der Betätigungseinrichtung 40 angeordnet, das in der hier gezeigten Ausführungsform als erste Federeinrichtung 36 dargestellt ist. Die erste Federeinrichtung 36 ist eine Schraubendruckfeder. Da sich das Sicherungselement 30 in seiner Sicherungsposition befindet, ist die erste Federeinrichtung 36 zusammengedrückt und befindet sich somit in einer vorgespannten Position.

Die erste Kammer 22, die durch eine vertikale Bohrung gebildet wird, grenzt im oberen Bereich an eine zweite Kammer 23 an, die durch eine horizontal angeordnete Bohrung gebildet wird. In der zweiten Kammer 23 ist ein Stellelement 42 der Betätigungseinrichtung 40 in horizontaler Richtung verschiebbar angeordnet. In den Kammern 22 und 23 werden das Sicherungselement 30 und das Stellelement 42 geführt.

Das Stellelement 42 ragt mit einem vorderen Abschnitt in die erste Kammer 22 hinein und befindet sich zwischen dem Sicherungselement 30 und der Deckwand 29a des Königszapfentellers 16. In dieser Position des Stellelements 42, die als Sperrstellung bezeichnet wird, wird das Sicherungselement 30 in der Sicherungsposition gehalten.

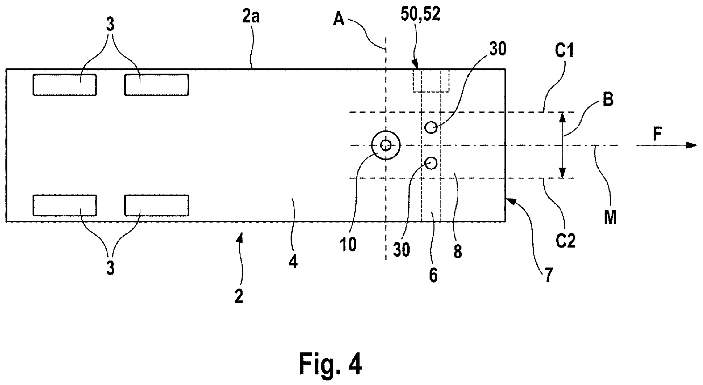

Am hinteren Ende des Stellelementes 42 ist ein Zugelement 46 in Form einer Stange befestigt, die durch eine Seitenwand 29b aus dem Gehäuse 21 bzw. dem Königszapfenteller 16 herausgeführt wird und sich durch eine lediglich schematisch dargestellte Quertraverse 6 bis zu einer Seitenwand 29a des Sattelaufliegers 2 geführt wird (s. auch Figur 4).

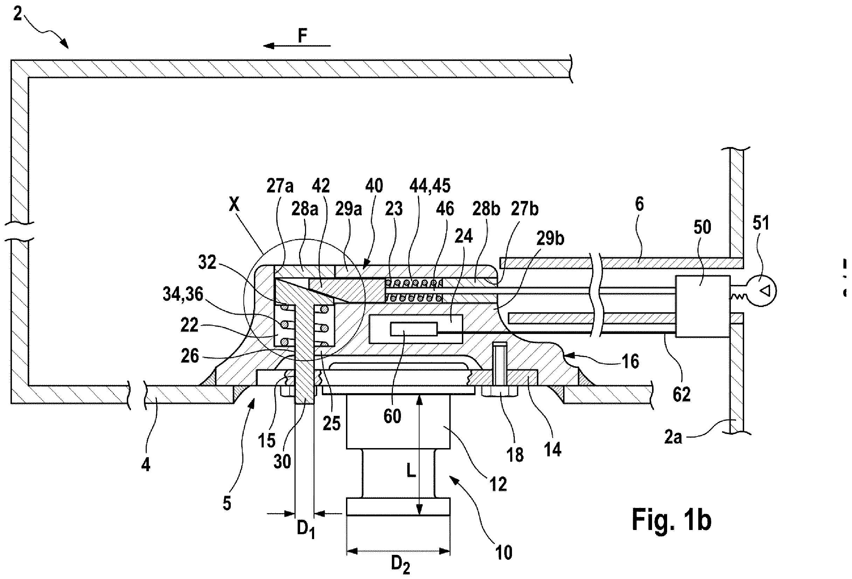

Am Ende der Stange 46 ist eine Schließeinrichtung 50 angeordnet, die mittels eines Schlüssels 51 gesperrt oder entsperrt werden kann. Die Schließeinrichtung 50 kann auch eine Eingabeeinrichtung aufweisen, um z. B. einen Code einzugeben. Wenn die Schließeinrichtung 50 entsperrt worden ist, kann die Bedienungsperson an der Stange 46 ziehen und somit das Stellelement 42 aus der Sperrstellung in die Freigabestellung ziehen, die in der Figur 1b dargestellt ist.

Zwischen dem Stellelement 42 und einem Verschlussteil 28b in der Seitenwand 29b ist ein zweites Stellmittel 44 angeordnet. Das zweite Stellmittel 44 ist in der hier gezeigten Ausführungsform eine zweite Federeinrichtung 45, die beim Herausziehen der Stange 46 komprimiert und somit vorgespannt wird (siehe ebenfalls Figur 1b). Die zweite Federeinrichtung 45 ist eine Schraubendruckfeder.

In dieser Freigabestellung des Stellelements 42 wird das Sicherungselement 30 durch die erste Federeinrichtung 36 nach oben in die Ruheposition gedrückt, in der das Sicherungselement 30 nicht mehr gegenüber der Bodenplatte 4 vorsteht.

In der dritten Kammer 24, die schematisch dargestellt ist, ist eine Kontrolleinrichtung 60 angeordnet, die über eine Signalleitung 62 mit der Schließeinrichtung 50 verbunden ist.

Die Kontrolleinrichtung 60 detektiert die Position des Stellelements und/oder die Position des Sicherungselements 30.

In der Deckwand 29a und der Seitenwand 29b des Königszapfentellers sind Einbauöffnungen 27a, 27b vorgesehen, die mit entsprechenden Verschlussteilen 28a, 28b verschlossen sind.

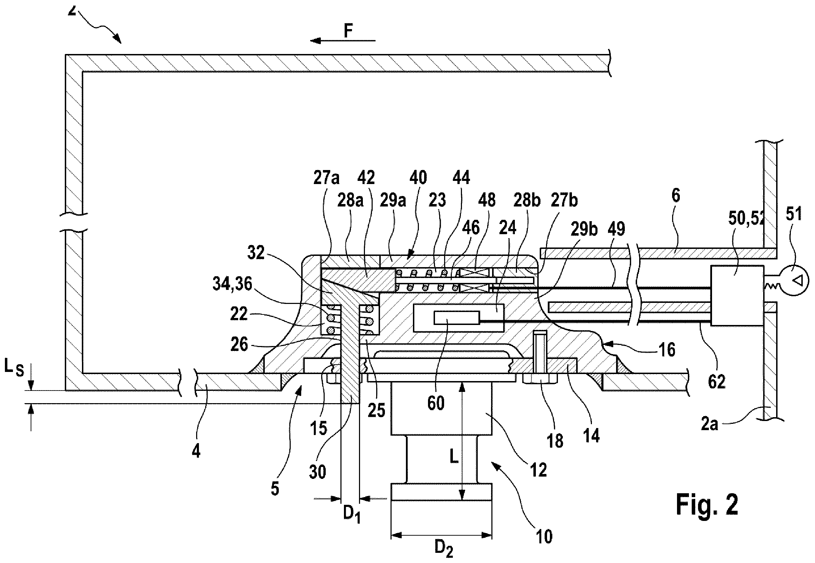

Während die Figuren 1a und 1b die mechanische Ausführungsform der Betätigungseinrichtung 40 zeigen, ist in der Figur 2 die elektromechanische Ausführungsform dargestellt.

Die in Figur 2 dargestellte Ausführungsform unterscheidet sich von der Ausführungsform in Figur 1 dadurch, dass die Stange 46 verkürzt ist und sich vollständig innerhalb der zweiten Kammer 23 befindet. Zum Betätigen ist ein Aktuator 48 vorgesehen, der über ein elektrisches Kabel 49 mit einer Steuereinrichtung 52 verbunden ist, die auch die Schließeinrichtung 50 aufweisen kann. Die Figur 2 zeigt entsprechend der Figur 1a das Sicherungselement 30 in Sicherungsposition.

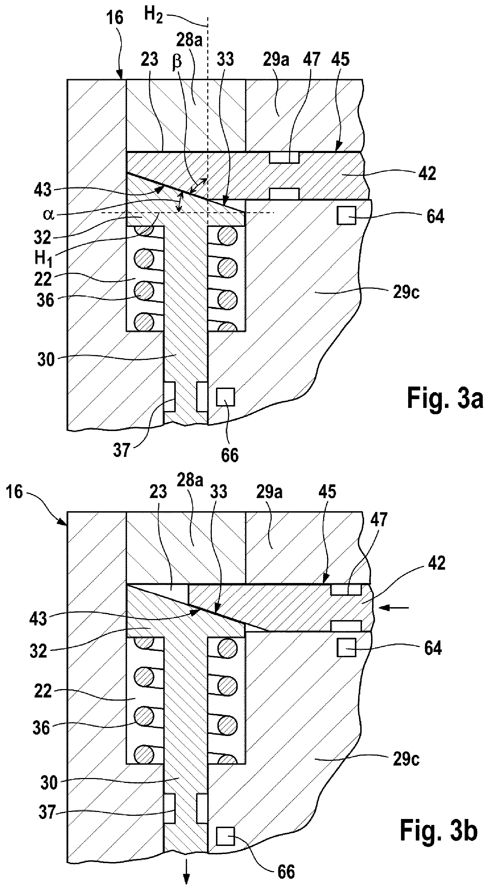

In den Figuren 3a und 3b ist eine vergrößerte Darstellung der Einzelheit X aus den Figuren 1a und 1b dargestellt. In der Figur 3a befindet sich das Sicherungselement 30 in der Sicherungsposition. Das Sicherungselement 30 weist einen Ringbund 32 auf, der an seiner Oberseite eine Anlaufschräge 33 aufweist, die mit einer Anlaufschräge 43 am vorderen Ende des Stellelementes 42 zusammenwirkt. Die Anlaufschräge 33 besitzt einen Neigungswinkel α bezogen auf die Hilfslinie H₁. Die Anlaufschräge 43 besitzt einen Neigungswinkel β bezogen auf die Hilfslinie H₂. Die Hilfslinien H₁ und H₂ liegen senkrecht zur jeweiligen Bewegungsrichtung von Sicherungselement 30 und Stellelement 42. In der hier gezeigten Ausführungsform beträgt der Winkel α - 15° und der Winkel β - 75°.

Das Stellelement 42 befindet sich in Sperrstellung und hält somit das Sicherungselement 30 in der Sicherungsposition, in der die an der Unterseite des Ringbundes 32 angreifende zweite Federeinrichtung 36 zusammengedrückt und somit gespannt ist. Die gesamte Anlaufschräge 43 des Stellelementes 42 liegt vollständig an der Anlaufschräge 33 des Sicherungselementes 30 an. Wenn das Stellelement 42 zurückgezogen wird, gleiten die beiden Anlaufschrägen 33 und 43 aufeinander, bis die in Figur 3b gezeigte Freigabestellung erreicht ist. In dieser Stellung befindet sich das Sicherungselement 30 in Ruheposition und liegt an der oberen Deckwand 29a an.

In den Figuren 3a, 3b sind in der Seitenwand 29c des Gehäuses Sensoren 64, 66 eingezeichnet, die z. B. Näherungssensoren sein können. Diese Sensoren sind Bestandteil der Kontrolleinrichtung 60.

Der Sensor 64 ist in der Nähe des Stellelementes 42 angeordnet, das eine Ringnut 47 aufweist. In Figur 3b liegt die Ringnut 47 dem Sensor 64 gegenüber.

Der Sensor 66 ist in der Nähe des Sicherungselementes 30 angeordnet, das eine Ringnut 37 aufweist. In Figur 3a liegt die Ringnut 37 dem Sensor 64 gegenüber. Mittels der Sensoren 64, 66 werden die Freigabe- und Sperrstellung des Stellelements 42 und die Ruhe- und Sicherungsposition des Sicherungselementes 30 detektiert.

In der Figur 4 ist eine Unteransicht eines Sattelaufliegers 2 dargestellt, der in Fahrtrichtung F im hinteren Bereich Räder 3 und im vorderen Bereich einen Königszapfen 10 aufweist. Senkrecht zur Fahrtrichtung F bzw. senkrecht zur Mittellinie M, die durch den Königszapfen 10 verläuft, ist eine Linie A eingezeichnet. Zwischen der Linie A und der Vorderkante 7 des Sattelaufliegers 2 befindet sich ein Zulaufbereich 8, der seitlich durch die zur Mittellinie M parallel angeordneten Linien C₁ und C₂ begrenzt wird.

Die Breite B des Zulaufbereichs 8 orientiert sich an der Breite von Sattelkupplungen und liegt vorzugsweise im Bereich kleiner 1 m. In diesem Zulaufbereich 8 kann die erfindungsgemäße Diebstahlsicherungsvorrichtung 20 mit dem Sicherungselement 30 angeordnet sein.

In der hier gezeigten Darstellung sind zwei Diebstahlsicherungsvorrichtungen 20 mit Sicherungselementen 30 vorgesehen, die sich seitlich der Mittellinie M befinden. Schematisch ist eine Quertraverse 6 eingezeichnet, in deren Innenraum z. B. die Signalkabel 62, die Stange 46 oder der oder die Bowdenzüge angeordnet werden können, die zu einer an einer Seitenwand 2a des Sattelaufliegers 2 angeordneten Steuereinrichtung 52 bzw. Schließeinrichtung 50 geführt werden.

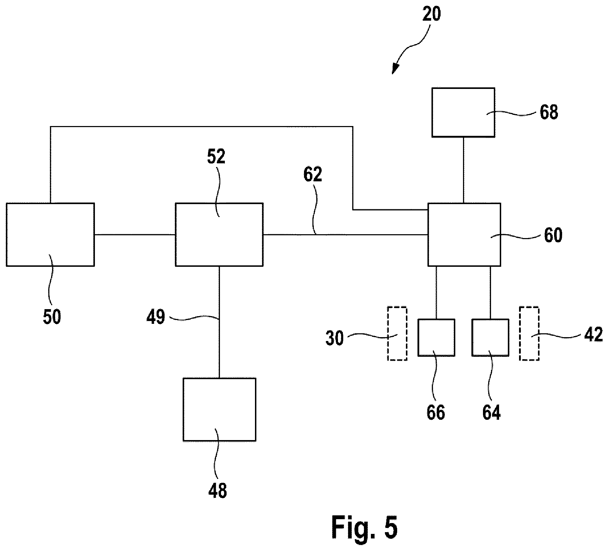

In der Figur 5 ist eine schematische Darstellung der elektro-mechanischen Diebstahlsicherungsvorrichtung 20 zur Verdeutlichung der Verknüpfung der Einzelkomponenten zu sehen.

Der Aktuator 48 ist mittels eines elektrischen Kabels 49 an die Steuereinrichtung 52 angeschlossen, die einerseits mit der Schließeinrichtung 50 und andererseits über eine Signalleitung 62 mit der Kontrolleinrichtung 60 verbunden ist. Die Kontrolleinrichtung 60 umfasst zwei Sensoren 64, 66 zur Überwachung der Stellposition des Sicherungselements 30 und des Stellelements 42. Die Kontrolleinrichtung umfasst weiterhin eine Anzeigeeinrichtung 68, die entsprechend der Signale der Sensoren 64, 68 unter anderem die Positionen des Sicherungselementes 30 und des Stellelementes 42 optisch oder akustisch anzeigt. Die Kontrolleinrichtung 60 kann auch mit der Schließeinrichtung 50 verbunden sein, um die Signale der Sensoren 64, 66 mit der Verriegelungs-/Entriegelungssituation abzugleichen.

### Bezugszeichenliste

- 2: Sattelauflieger
- 2a: Seitenwand
- 3: Rad
- 4: Bodenplatte des Sattelaufliegers
- 5: Öffnung in der Bodenplatte
- 6: Quertraverse
- 7: Vorderkante
- 8: Zulaufbereich
- 10: Königszapfen
- 12: Zapfen
- 13: Taille
- 14: Befestigungsflansch
- 15: Durchtrittsöffnung
- 16: Königszapfenteller
- 18: Befestigungsschraube
- 20: Diebstahlsicherungsvorrichtung
- 21: Gehäuse
- 22: erste Kammer
- 23: zweite Kammer
- 24: dritte Kammer
- 25: Bodenwand
- 26: Durchtrittsöffnung
- 27a,b: Einbauöffnung
- 28a,b: Verschlussteil
- 29a: Deckwand
- 29b: Seitenwand
- 29c: Seitenwand
- 30: Sicherungselement
- 32: Ringbund
- 33: Anlaufschräge
- 34: erstes Stellmittel
- 36: erste Federeinrichtung
- 37: Ringnut
- 40: Betätigungseinrichtung
- 42: Stellelement
- 43: Anlaufschräge
- 44: zweites Stellmittel
- 45: zweite Federeinrichtung
- 46: Zugelement, Stange
- 47: Ringnut
- 48: Aktuator
- 49: elektrisches Kabel
- 50: Schließeinrichtung
- 51: Schlüssel
- 52: Steuereinrichtung
- 60: Kontrolleinrichtung
- 62: Signalleitung
- 64: Sensor
- 66: Sensor
- 68: Anzeigeeinrichtung
- A: Linie
- B: Breite des Zulaufbereichs 8
- C1: Begrenzungslinie des Zulaufbereichs 8
- C2: Begrenzungslinie des Zulaufbereichs 8
- F: Fahrtrichtung
- D₁: Durchmesser des Sicherungselements
- D₂: größter Durchmesser des Königszapfens
- L: Länge des Königszapfens
- Ls: Überstandslänge des Sicherungselements
- M: Mittellinie
- H₁: Horizontale
- H₂: Horizontale
- α: Neigungswinkel
- β: Neigungswinkel

## Patentansprüche

1. Diebstahlsicherungsvorrichtung (20) für Sattelauflieger (2), die einen Königszapfen (10) aufweisen, mit mindestens einem Sicherungselement (30), das von einer eingefahrenen Ruheposition in eine ausgefahrene Sicherungsposition und umgekehrt bewegbar ist, und mit einer Betätigungseinrichtung (40), die ein am Sicherungselement (30) angreifendes Stellelement (42) aufweist, wobei
die Betätigungseinrichtung (40) ein am Sicherungselement (30) angreifendes erstes Stellmittel (34) aufweist, das das Sicherungselement (30) aus der Sicherungsposition in die Ruheposition bewegt und in dieser Ruheposition hält,
wobei das Stellelement (42) das Sicherungselement (30) aus der Ruheposition in die Sicherungsposition bewegt und in der Sicherungsposition hält, **dadurch gekennzeichnet,**
**dass** die Betätigungseinrichtung (40) ein zweites Stellmittel (44) aufweist, das das Stellelement (42) von einer Freigabestellung in eine Sperrstellung bewegt,
wobei das zweite Stellmittel (44) eine zweite Federeinrichtung (45) umfasst.

2. Diebstahlsicherungsvorrichtung nach Anspruch 1, **dadurch gekennzeichnet, dass** das erste Stellmittel (34) eine erste Federeinrichtung (36) umfasst.

3. Diebstahlsicherungsvorrichtung nach Anspruch 2, **dadurch gekennzeichnet, dass** die Federkraft der zweiten Federeinrichtung (44) größer ist als die Federkraft der ersten Federeinrichtung (36).

4. Diebstahlsicherungsvorrichtung nach einem der Ansprüche 1 bis 3, **dadurch gekennzeichnet, dass** zwischen dem Sicherungselement (30) und dem Stellelement (42) eine Übersetzungseinrichtung angeordnet ist oder dass das Sicherungselement (30) und das Stellelement (42) eine Übersetzungseinrichtung bilden.

5. Diebstahlsicherungsvorrichtung nach einem der Ansprüche 1 bis 4, **dadurch gekennzeichnet, dass** das Stellelement (42) eine Auslenkkontur aufweist, die bei Bewegung des Stellelements (42) in seine Sperrstellung am Sicherungselement (30) angreift und das Sicherungselement (30) in seine Sicherungsstellung bewegt.

6. Diebstahlsicherungsvorrichtung nach einem der Ansprüche 1 bis 5, **dadurch gekennzeichnet, dass** die Betätigungseinrichtung (40) mindestens ein Zugelement aufweist, das mit einem ersten Ende an dem Stellelement (42) befestigt ist.

7. Diebstahlssicherungsvorrichtung nach einem der Ansprüche 1 bis 6, **dadurch gekennzeichnet, dass** die Betätigungseinrichtung (40) einen Aktuator (48) aufweist, der das Stellelement (42) von seiner Sperrstellung in die Freigabestellung bewegt.

8. Diebstahlssicherungsvorrichtung nach Anspruch 7, **dadurch gekennzeichnet, dass** der Aktuator (48) elektrisch an eine Steuereinrichtung (52) angeschlossen ist, mittels der der Aktuator (48) ansteuerbar ist.

9. Diebstahlsicherungsvorrichtung nach einem der Ansprüche 1 bis 8, **dadurch gekennzeichnet, dass** das Stellelement (42) und das Sicherungselement (30) derart angeordnet sind, dass die Bewegungsrichtung des Stellelements (42) senkrecht zur Bewegungsrichtung des Sicherungselementes (30) verläuft.

10. Diebstahlsicherungsvorrichtung nach einem der Ansprüche 1 bis 9, **dadurch gekennzeichnet, dass** eine Kontrolleinrichtung (60) zur Überwachung der Stellposition des Sicherungselements (30) und/oder des Stellelements (42) vorgesehen ist.

11. Diebstahlsicherungsvorrichtung nach einem der Ansprüche 1 bis 10, **dadurch gekennzeichnet, dass** mindestens das Sicherungselement (30) und das Stellelement (42) sowie mindestens die Stellmittel (34, 44) der Betätigungseinrichtung (40) in einem Gehäuse (21) angeordnet sind.

12. Diebstahlsicherungsvorrichtung nach Anspruch 11, **dadurch gekennzeichnet, dass** das Gehäuse (21) ein Königszapfenteller (16) ist.

13. Königszapfen mit einem Königszapfenteller (16), der an einer Bodenplatte (4) eines Sattelaufliegers (2) befestigbar ist, **dadurch gekennzeichnet, dass** der Königszapfenteller (16) eine Diebstahlsicherungsvorrichtung gemäß einem der Ansprüche 1 bis 11 aufweist.

14. Sattelauflieger mit einem Königszapfen (10) und einem Königszapfenteller (16) sowie mit einer Diebstahlsicherungsvorrichtung gemäß einem der Ansprüche 1 bis 12, **dadurch gekennzeichnet, dass** das Sicherungselement (30) derart am Sattelauflieger (2) angeordnet ist, dass das Sicherungselement (30) in seiner Sicherungsposition ein Ankuppeln des Königszapfens (10) verhindert.

15. Sattelauflieger nach Anspruch 14, **dadurch gekennzeichnet, dass** das Sicherungselement (30) über eine Länge LS gegenüber der Unterseite einer Bodenplatte (4) des Sattelaufliegers vorsteht, und dass der Königszapfen (10) eine Taille (13) aufweist, wobei LS derart gewählt ist, dass das Sicherungselement (30) mindestens 5 mm in die Taille (13) des Königszapfens (10) ragt.

## Claims

1. Anti-theft device (20) for semitrailers (2) which have a king pin (10), having at least one securing element (30) which can be moved from a retracted rest position into an extended securing position and vice versa, and having an actuating device (40) which has an actuating element (42) acting on the securing element (30),
the actuating device (40) having a first actuating means (34) which engages on the securing element (30) and moves the securing element (30) out of the securing position into the rest position and holds it in this rest position,
the actuating element (42) moving the securing element (30) from the rest position into the securing position and holds it in the securing position, **characterised in that**
the actuating device (40) has a second actuating element (44) which moves the actuating element (42) from a releasing position into a locking position,
the second actuating means (44) comprising a second spring device (45).

2. Anti-theft device according to claim 1, **characterised in that** the first actuating means (34) comprises a first spring device (36).

3. Anti-theft device according to claim 2, **characterised in that** the spring force of the second spring device (44) is greater than the spring force of the first spring device (36).

4. Anti-theft device according to one of the claims 1 to 3, **characterised in that** a transmission device is arranged between the securing element (30) and the actuating element (42) or that the securing element (30) and the actuating element (42) form a transmission device.

5. Anti-theft device according to one of claims 1 to 4, **characterised in that** the actuating element (42) has a deflection contour which, when the actuating element (42) moves into its locking position, engages on the securing element (30) and moves the securing element (30) into its securing position.

6. Anti-theft device according to one of the claims 1 to 5, **characterised in that** the actuating device (40) has at least one tension element, which is attached to the actuating element (42) by a first end.

7. Anti-theft device according to one of the claims 1 to 6, **characterised in that** the actuating device (40) has an actuator (48) which moves the actuating element (42) from its locking position into the releasing position.

8. Anti-theft device according to claim 7, **characterised in that** the actuator (48) is electrically connected to a control device (52), by means of which the actuator (48) can be operated.

9. Anti-theft device according to one of claims 1 to 8, **characterised in that** the actuating element (42) and the securing element (30) are arranged in such a way that the direction of movement of the actuating element (42) is perpendicular to the direction of movement of the securing element (30).

10. Anti-theft device according to one of the claims 1 to 9, **characterised in that** a control device (60) is provided to monitor the operating position of the securing element (30) and/or of the actuating element (42).

11. Anti-theft device according to one of claims 1 to 10, **characterised in that** at least the securing element (30) and the actuating element (42) and at least the actuating means (34, 44) of the actuating device (40) are arranged in a housing (21).

12. Anti-theft device according to claim 11, **characterised in that** the housing (21) is a kingpin plate (16).

13. King pin with a king pin plate (16) that can be attached to a floor plate (4) of a semitrailer (2), **characterised in that** the king pin plate (16) has an anti-theft device according to one of claims 1 to 11.

14. Semitrailer with a king pin (10) and a king pin plate (16) and with an anti-theft device according to one of claims 1 to 12, **characterised in in that** the securing element (30) is arranged on the semitrailer (2) in such a way that, in its securing position, the securing element (30) prevents the king pin (10) from being coupled.

15. Semitrailer according to claim 14, **characterised in that** the securing element (30) projects over a length LS with respect to the underside of a floor plate (4) of the semitrailer, and **in that** the king king pin (10) has a waist (13), wherein LS is selected such that the securing element (30) projects at least 5 mm into the waist (13) of the king pin (10).

## Revendications

1. Dispositif de sécurité anti-vol (20) pour semi-remorques (2), qui présentent un pivot central (10), avec au moins un élément de sécurité (30), qui peut être déplacé depuis une position de repos rentrée dans une position de sécurité sortie et inversement, et avec un système d'actionnement (40), qui présente un élément de réglage (42) s'engageant sur l'élément de sécurité (30), dans lequel
le système d'actionnement (40) présente un premier moyen de réglage (34) s'engageant sur l'élément de sécurité (30), qui déplace l'élément de sécurité (30) depuis la position de sécurité dans la position de repos et le maintient dans ladite position de repos,
dans lequel
l'élément de réglage (42) déplace l'élément de sécurité (30) depuis la position de repos dans la position de sécurité et le maintient dans la position de sécurité, **caractérisé en ce**
**que** le système d'actionnement (40) présente un deuxième moyen de réglage (44), qui déplace l'élément de réglage (42) depuis une position de déblocage dans une position de blocage,
dans lequel le deuxième moyen de réglage (44) comprend un deuxième système de ressort (45).

2. Dispositif de sécurité anti-vol selon la revendication 1, **caractérisé en ce que** le premier moyen de réglage (34) comprend un premier système de ressort (36).

3. Dispositif de sécurité anti-vol selon la revendication 2, **caractérisé en ce que** la force de ressort du deuxième système de ressort (44) est supérieure à la force de ressort du premier système de ressort (36).

4. Dispositif de sécurité anti-vol selon l'une quelconque des revendications 1 à 3, **caractérisé en ce qu'**un système de démultiplication est disposé entre l'élément de sécurité (30) et l'élément de réglage (42), ou que l'élément de sécurité (30) et l'élément de réglage (42) forment un système de démultiplication.

5. Dispositif de sécurité anti-vol selon l'une quelconque des revendications 1 à 4, **caractérisé en ce que** l'élément de réglage (42) présente un contour de déviation, qui s'engage sur l'élément de sécurité (30) lors du déplacement de l'élément de réglage (42) sans sa position de blocage et déplace l'élément de sécurité (30) dans sa position de sécurité.

6. Dispositif de sécurité anti-vol selon l'une quelconque des revendications 1 à 5, **caractérisé en ce que** le système d'actionnement (40) présente au moins un élément de traction, qui est fixé sur l'élément de réglage (42) par une première extrémité.

7. Dispositif de sécurité anti-vol selon l'une quelconque des revendications 1 à 6, **caractérisé en ce que** le système d'actionnement (40) présente un actionneur (48), qui déplace l'élément de réglage (42) depuis sa position de blocage dans la position de déblocage.

8. Dispositif de sécurité anti-vol selon la revendication 7, **caractérisé en ce que** l'actionneur (48) est raccordé électriquement à un système de commande (52), au moyen duquel l'actionneur (48) peut être piloté.

9. Dispositif de sécurité anti-vol selon l'une quelconque des revendications 1 à 8, **caractérisé en ce que** l'élément de réglage (42) et l'élément de sécurité (30) sont disposés de telle manière que la direction de déplacement de l'élément de réglage (42) s'étend de manière perpendiculaire à la direction de déplacement de l'élément de sécurité (30).

10. Dispositif de sécurité anti-vol selon l'une quelconque des revendications 1 à 9, **caractérisé en ce qu'**un système de contrôle (60) est prévu pour surveiller la position de réglage de l'élément de sécurité (30) et/ou de l'élément de réglage (42).

11. Dispositif de sécurité anti-vol selon l'une quelconque des revendications 1 à 10, **caractérisé en ce qu'**au moins l'élément de sécurité (30) et l'élément de réglage (42) ainsi qu'au moins les moyens de réglage (34, 44) du système d'actionnement (40) sont disposés dans un boîtier (21).

12. Dispositif de sécurité anti-vol selon la revendication 11, **caractérisé en ce que** le boîtier (21) est une plaque de pivot central (16).

13. Pivot central avec une plaque de pivot central (16), qui peut être fixée sur un panneau de plancher (4) d'une semi-remorque (2), **caractérisé en ce que** la plaque de pivot central (16) présente un dispositif de sécurité anti-vol selon l'une quelconque des revendications 1 à 11.

14. Semi-remorque avec un pivot central (10) et une plaque de pivot central (16) ainsi qu'avec un dispositif de sécurité anti-vol selon l'une quelconque des revendications 1 à 12, **caractérisée en ce que** l'élément de sécurité (30) est disposé de telle manière sur la semi-remorque (2) que l'élément de sécurité (30) empêche dans sa position de blocage un accouplement du pivot central (10).

15. Semi-remorque selon la revendication 14, **caractérisée en ce que** l'élément de sécurité (30) fait saillie d'une longueur LS par rapport au côté inférieur du panneau de plancher (4) de la semi-remorque, et que le pivot central (10) présente une section la plus étroite (13), dans laquelle LS est choisie de telle manière que l'élément de sécurité (30) dépasse d'au moins 5 mm dans la section la plus étroite (13) du pivot central (10).
